# EUROPÄISCHE PATENTSCHRIFT

(11) **EP 2 389 753 B1**
(45) Veröffentlichungstag und Bekanntmachung des Hinweises auf die Patenterteilung: **30.07.2014**
(21) Anmeldenummer: 10793164.4
(22) Anmeldetag: 10.12.2010
(51) Int. Cl.: H04M 1/253, H04M 1/725, H04M 3/56, G06F 3/01

(54) **KONFERENZSYSTEM UND ZUGEORDNETES SIGNALGEBUNGSVERFAHREN**
CONFERENCE SYSTEM AND ASSOCIATED SIGNALLING METHOD
SYSTÈME DE CONFÉRENCE TÉLÉPHONIQUE ET PROCÉDÉ CORRESPONDANT DE SIGNALISATION

(30) Priorität: 10.12.2009 DE 102009057725
(43) Veröffentlichungstag der Anmeldung: 30.11.2011
(73) Patentinhaber: Unify GmbH & Co. KG, 81379 München (DE)
(72) Erfinder: AGSTEINER, Florian, 82008 Unterhaching (DE); HAEBERLE, Tobias, 85748 Garching (DE); HANEL, Matthias, 85104 Pförring (DE); JADID, Adnane, 80805 München (DE); LEDERER, Thomas, 82211 Herrsching (DE); REISS, Maximilian, 81539 München (DE)
(74) Vertreter: Fritzsche, Thomas
(86) Internationale Anmeldenummer: PCT/EP2010/007534
(87) Internationale Veröffentlichungsnummer: WO 2011/069668

(56) Entgegenhaltungen:
- DE-A1-102007 058 586
- US-A1- 2006 098 085
- US-A1- 2008 158 334
- US-A1- 2009 009 588

## Beschreibung

### Technisches Gebiet

Die Erfindung betrifft ein Konferenzsystem mit mindestens zwei mobilen Endgeräten mit jeweils einer signalgebenden Vorrichtung und ein zugeordnetes Signalgebungsverfahren.

### Stand der Technik

Im Stand der Technik ist es bekannt, mobile Endgeräte, welche der zwischenmenschlichen Kommunikation dienen, wie z.B. Mobiltelefone, Smartphones, PDAs, Tablet PCs und Laptops auf verschiedene Weisen zu bedienen. Die Benutzereingaben können über Tastatur, mit Eingabegeräten, per Sprachsteuerung, per Regler, oder auf andere Weise vorgenommen werden. Bekannt ist auch, durch Bewegungen eines Eingabegerätes, wie z.B. der Finger, auf einer berührungsempfindlichen Bedienoberfläche die Gerätefunktionen zu steuern. Ferner ist bekannt, das Endgerät zu bewegen, um beispielsweise den Darstellungsmodus des mobilen Endgerätes zu beeinflussen, zum Beispiel von einem hochformatigen Wiedergabemodus in einen Querformatigen umschalten, siehe z.B: Apple iPhone (http://www.apple.com/de/phone/). Die im Zusammenhang mit mobilen Endgeräten zur zwischenmenschlichen Kommunikation bekannten Steuer- und Eingabevorrichtungen und -verfahren haben jedoch den Nachteil, dass sie Gesten der zwischenmenschlichen nonverbalen Kommunikation, zur Steuerung oder Eingabe nicht zugänglich sind. Solche Gesten der zwischenmenschlichen nonverbalen Kommunikation, insbesondere unspezifische derartige Gesten, bleiben den mobilen Kommunikationsendgeräten im Stand der Technik verschlossen.

WO 2006/107463 A1 offenbart ein Verfahren und eine Vorrichtung zur visuellen Darstellung, die aus einer Sprechverbindung eines Kommunikationsgerätes vorgegebene gespeicherte Sprechcharakteristiken ermittelt und anzeigt. Weiterhin offenbart WO 2008/138407 A1 ein Mobilendgerät mit einem WLAN-Transceiver und einem Bewegungssensor, wobei durch die ermittelte Bewegung ein Multimediaobjekt erzeugt wird.

Im heutigen Berufsleben, z.B. in der Industrie, werden immer häufiger Telefon- oder Videokonferenzen geführt zur gemeinsamen Abstimmung oder zur effizienten und zeitnahen Weitergabe von Informationen. Hierbei kann es durchaus vorkommen, dass die Telefonkonferenzen eine größere Teilnehmerzahl erreichen, z.B. 10 oder 20 Teilnehmer in größeren Unternehmen, u.U. sogar viel mehr.

Die Konferenzsysteme, sogenannte Konferenz-Brücken, erlauben verschiedene Betriebsmodi - z.B. können alle Teilnehmer bidirektional kommunizieren, d.h. gleichzeitig Sprechen wie auch sämtliche anderen Teilnehmer hören. Dabei kann es vorkommen, dass Teilnehmer störende Nebengeräusche einspielen, die die Qualität der Konferenzakkustik sehr stört. Deshalb kann der Einsatz des Modus einer sog. moderierten Konferenz sinnvoll sein, d.h. die Zu- oder Wegschaltung (Stummschaltung) der Teilnehmer erfolgt von Moderatoren.

Der Moderator hat Übersicht über sämtliche Teilnehmer und kann dann über eine mit dem Konferenzsystem verbundene Steuerungsapplikation diese Funktion ausführen und sozusagen das Wort erteilen. Um sich dann zu Wort zu melden, muss der Teilnehmer den Moderator über einen zusätzlichen Telefonanruf, z. B. auf dem Mobiltelefon des Moderators anrufen, um sich bemerkbar zu machen, dass er "laut" zugeschaltet wird, um auf der Konferenz reden zu können.

In US 2008/0158334 A1 werden visuelle Effekte für Videoanrufe unter Benutzung von Bewegungssensoren und -detektoren offenbart. DE 10 2007 058 586 A1 und US 2006/0098085 A1 offenbaren ein Konferenzsystem. US 2009/0009588 A1 offenbart ein Konferenzsystem, bei dem eine Geste eines Benutzers eines mobilen Endgerätes erkannt und einem anderen Benutzer eines anderen mobilen Endgerätes übertragen wird. Bei den Gesten handelt es sich um Kopfdrehen für die Geste "nein" und Kopfnicken für "ja", wobei die Gesten von vielen Benutzern auf einem Bildschirm eines Rechners zu einer statistischen Auswertung angezeigt werden können.

### Aufgabe der Erfindung

Es ist daher Aufgabe der vorliegenden Erfindung, ein Konferenzsystem und ein zugeordnetes Signalgebungsverfahren zur Verfügung zu stellen, welche das Spektrum der menschlichen Verständigung über mobile Endgeräte erweitert. Diese Aufgabe wird durch das Konferenzsystem nach Anspruch 1, und das Signalgebungsverfahren nach Anspruch 10 und dessen Verwendung nach den Ansprüchen 12 - 14 gelöst.

Hieraus ergibt sich der Vorteil, dass stummgeschaltete Konferenzteilnehmer nun eine Wortmeldung machen können und dadurch sich an einer Diskussion aktiv beteiligen können, wobei eine Wortmeldung von einem mobilen Telefon nun mit einer Gestik, z.B. Schütteln oder ruckartiges Hochheben als Handheben, ermöglicht wird.

Das Konferenzsystem umfasst mindestens zwei mobile Endgeräte mit jeweils einer signalgebenden Vorrichtung, die einen Sensor enthält, welcher eine Bewegung der signalgebenden Vorrichtung detektiert und ein korrespondierendes Bewegungssignal ausgibt. Weiterhin sind darin enthalten, eine Bewegungssignal-Verarbeitungsvorrichtung, die das Bewegungssignal, einer Geste der nonverbalen zwischenmenschlichen Kommunikation einem Bewegungssignalmuster zuordnet und infolge einer erfolgten Zuordnung ein Ausgangssignal mit einer korrespondierenden Information über die Art der detektierten Geste der nonverbalen zwischenmenschlichen Kommunikation erzeugt. Desweiteren enthält das Konferenzsystem eine Sendevorrichtung zur Zuführung des Ausgangssignals zu einem Übertragungskanal, der jeweils mit einem Local Area Network verbunden ist. Daran ist ein Telefon vorzugsweise ein IP-Telefon (11) für einen Moderator sowie ein Bildschirm zur Konferenzsteuerung angeschlossen.

Weitere vorteilhafte Ausgestaltungen der Erfindung sind in den abhängigen Ansprüchen angegeben.

Weiterhin wird eine signalgebende Vorrichtung für mobile Endgeräte, welche zur zwischenmenschlichen Kommunikation geeignet ist, verwendet, welches einen Sensor enthält, der eine Bewegung der signalgebenden Vorrichtung detektiert und ein korrespondierendes Bewegungssignal ausgibt. Ferner enthält die signalgebende Vorrichtung eine Bewegungssignal-Verarbeitungsvorrichtung, die das Bewegungssignal einer Geste der nonverbalen zwischenmenschlichen Kommunikation (dazu zählen insbesondere Gesten infolge der Bewegung von Körperteilen zum Zwecke der zwischenmenschlichen Verständigung oder Kontaktaufnahme) zuordnet. Dies erfolgt durch Vergleich mit gespeicherten Bewegungsmustern. Nach erfolgter Zuordnung wird ein Ausgangssignal mit einer korrespondierenden Information erzeugt, zum Beispiel ob und/oder welche Geste vorliegt.

Die signalgebende Vorrichtung enthält ferner eine Sendevorrichtung zur Zuführung des Ausgangssignals zu einem Übertragungskanal. Dies kann ein drahtloser oder leitungsgebundener Übertragungskanal sein oder eine Kombination hiervon. Die Bewegungssignal-Verarbeitungsvorrichtung ordnet das Bewegungssignal einem Bewegungssignalmuster zu. Dies kann ein gespeichertes oder ein der Signalgebenden Vorrichtung bekanntes Bewegungssignalmuster sein. Weiterhin erzeugt die Bewegungssignal-Verarbeitungsvorrichtung ein Ausgangssignal, welches eine Information über die Art der detektierten Geste der nonverbalen zwischenmenschlichen Kommunikation enthält. Ferner ist vorgesehen, dass das Ausgangssignal zusätzliche Informationen enthält, insbesondere solche, die einen Hinweis auf den Verursacher des Bewegungssignals geben. Die Bewegungssignal-Verarbeitungsvorrichtung ist in der Lage, die nonverbalen menschlichen Gesten des Bemerkbarmachens, insbesondere des Winkens und/oder Schüttelns und/oder einer Meldung, infolge einer Bewegung der signalgebenden Vorrichtung zu detektieren. Vorteilhafterweise kann die Bewegungssignal-Verarbeitungsvorrichtung nutzerspezifische Bewegungssignalmuster erkennen und/oder diese in der Signalgebenden Vorrichtung, insbesondere zur erneuten Zuordnung, abspeichern.

Ferner ist gemäß einer vorteilhaften Ausführungsform der Erfindung der Sensor und/oder die Bewegungssignal-Verarbeitungsvorrichtung so ausgebildet, dass unbewusste Gesten der nonverbalen zwischenmenschlichen Kommunikation unterdrückt werden, so dass diese kein Bewegungssignal und/oder Ausgangssignal zur Folge haben.

Bei einer weiteren vorteilhaften Ausführungsform der Erfindung verarbeitet und/oder speichert die signalgebende Vorrichtung Bewegungssignalmuster von einer externen Datenquelle, die nicht Bestandteil der signalgebenden Vorrichtung ist.

Bei der Ausführungsform ist der Übertragungskanal zwischen der Sendevorrichtung und einer Empfangsvorrichtung gebildet, wobei die Empfangsvorrichtung von der Signalgebenden Vorrichtung abgesondert. Zum Beispiel kann der Übertragungskanal in Form einer Funkstrecke gebildet sein. Sende- und Empfangsvorrichtung sind dabei voneinander räumlich entfernt.

Des Weiteren enthält das Konferenzsystem eine zur Konferenzsteuerung Signalisiervorrichtung, welche eine Ausgabevorrichtung enthält, welche die Information des Ausgangssignals ausgibt, die mit der Geste der nonverbalen zwischenmenschlichen Kommunikation korrespondiert. Die Signalisiervorrichtung enthält ferner eine Ausgangssignal-Verarbeitungsvorrichtung, welche die Information, welche mit der Geste der nonverbalen zwischenmenschlichen Kommunikation korrespondiert, aufgrund des Ausgangssignals generiert. Weiterhin enthält die Signalisiervorrichtung eine Empfangsvorrichtung, welche das Ausgangssignal empfängt. Diese kann beispielsweise Bestandteil der Ausgangssignal-Verarbeitungsvorrichtung sein.

Ferner kann gemäß einer vorteilhaften Ausführungsform der Erfindung die vorzugsweise an einen Nutzer der Signalisiervorrichtung auszugebende Information zusätzlich einen Hinweis auf den Verursacher des Bewegungssignals geben. Bei einer weiteren vorteilhaften Ausführungsform der Erfindung wird die auszugebende Information aufgrund von in der Ausgangssignal-Verarbeitungsvorrichtung gespeicherten Signalmustern, insbesondere durch Zuordnung eines solchen zu dem Ausgangssignal, generiert. Gemäß weiterer vorteilhafter Ausführungsformen der Erfindung erfolgt die Ausgabe der Information visuell auf einem dazu geeigneten Mittel der Signalisiervorrichtung, insbesondere einem Bildschirm, akustisch durch ein dazu geeignetes Mittel der Signalisiervorrichtung, und/oder durch ein Mittel der Signalisiervorrichtung, welches haptische Reize erzeugt, insbesondere Vibration.

Ferner wird gemäß einer vorteilhaften Ausführungsform der Erfindung vorgeschlagen, dass die Signalisiervorrichtung Signalmuster von einer externen Datenquelle verarbeitet, die nicht Bestandteil der Signalisiervorrichtung ist.

Gemäß einem weiteren Aspekt der Erfindung wird ein Signalgebungsverfahren für das Konferenzsystem, vorgeschlagen, welches als ersten Schritt das Detektieren einer Bewegung einer signalgebenden Vorrichtung und Ausgeben eines Bewegungssignals vorsieht. In einem zweiten Schritt wird das Bewegungssignal einer Geste der nonverbalen zwischenmenschlichen Kommunikation zugeordnet und in einem dritten Schritt ein Ausgangssignal im Falle einer erfolgten Zuordnung erzeugt, welches eine Information enthält, die mit der Geste der nonverbalen zwischenmenschlichen Kommunikation korrespondiert. Als vierter Schritt ist vorgesehen: Senden des Ausgangssignals über einen Übertragungskanal. Als fünfter Schritt ist vorgesehen: Empfangen des Ausgangssignals, welches über den Übertragungskanal übertragen wurde.

Bei noch einer weiteren vorteilhaften Ausführungsform der Erfindung wird ein Signalisierverfahren vorgeschlagen, welches als ersten Schritt das Generieren einer Information aufgrund des Ausgangssignals vorsieht, wobei die Information mit der Geste der nonverbalen zwischenmenschlichen Kommunikation korrespondiert, und welches als zweiten Schritt das Ausgeben der Information vorsieht.

Weitere Merkmale und Vorteile der Erfindung ergeben sich aus der nachfolgenden Beschreibung von Ausführungsbeispielen der Erfindung, anhand der Figuren der Zeichnung, die erfindungswesentliche Einzelheiten zeigen, und aus den Ansprüchen. Die einzelnen Merkmale können je einzeln für sich oder zu mehreren in beliebiger Kombination bei einer Variante der Erfindung verwirklicht sein.

### Kurzbeschreibung der Zeichnungen

Bevorzugte Ausführungsformen der Erfindung werden nachfolgend anhand der beigefügten Zeichnungen näher erläutert. Es zeigen:
Fig. 1 eine Ausführungsform eines mobilen Endgeräts mit einer Signalgebenden Vorrichtung zur Erläuterung der Erfindung;
Fig. 2 schematisch eine weitere Ausführungsform eines mobilen Endgerätes mit einer Signalgebenden Vorrichtung zur Erläuterung der Erfindung;
Fig. 3 schematisch ein Signal eines Sensors einer Signalgebenden Vorrichtung gemäß Fig. 1 bzw. Fig. 2 zur Erläuterung der Erfindung;
Fig. 4 schematisch einer Ausführungsform einen Signalisiervorrichtung zur Erläuterung der Erfindung;
Fig. 5 eine weitere Ausführungsform eines mobilen Endgeräts mit einer Signalisiervorrichtung zur Erläuterung der Erfindung;
Fig. 6 eine erste erfindungsgemäße Ausführungsform eines Konferenzsystems unter Verwendung der signalgebenden Vorrichtung;
Fig. 7 ein Blockschaltbild eines in dem erfindungsgemäßen Ausführungsbeispiel des in Fig. 6 gezeigten Konferenzsystem verwendeten mobilen Endgerätes;
Fig. 8 ein IP-Telefon mit Anzeige eines User-Interfaces zum Einsatz in einem weiteren erfindungsgemäßen Konferenzsystem;
Fig. 9 eine zweite erfindungsgemäße Ausführungsform eines Konferenzsystems zur Durchführung einer Auktion unter Verwendung von in Fig. 7 gezeigten mobilen Endgeräten.

In der nachfolgenden Beschreibung und den Zeichnungen entsprechen gleichen Bezugszeichen Elemente gleicher oder vergleichbarer Funktion.

### Beschreibung von Ausführungsformen

Der Begriff Geste bezeichnet im Rahmen der vorliegenden Erfindung die zeichenhafte Bewegung eines bzw. mehrerer bestimmter Körperteile eines Menschen, die vorwiegend der Verständigung, Kontaktaufnahme und dergleichen Zwecken dient. Die Geste als Bestandteil der menschlichen Gestik ist vorliegend von den Bewegungen der Mimik zu unterscheiden. Der Begriff Geste nähert sich vorliegend in seiner Bedeutung der Bedeutung des Begriffs Gebärde (Bewegen eines Körperteils) weitgehend an und unterscheidet sich gegebenfalls dahingehend, dass Gesten mitunter eine gewisse Symbolik zukommt.

Der Begriff "zwischenmenschliche Kommunikation" bezeichnet vorliegend die Kommunikation Mensch zu Mensch, also das insbesondere wechselseitige Aufeinandereinwirken von Individuen.

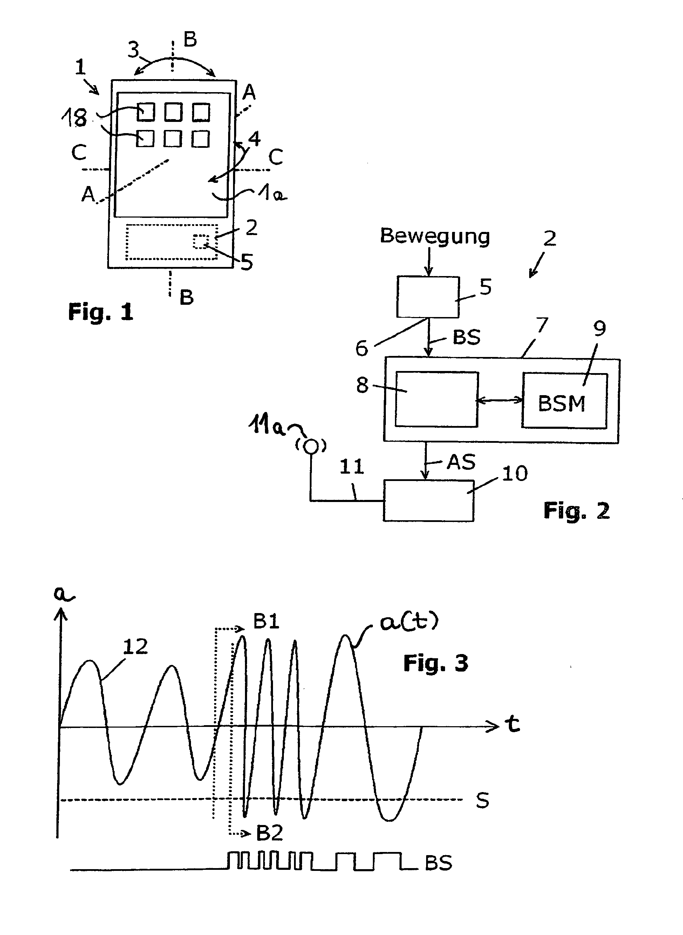

Fig. 1 zeigt beispielhaft ein mobiles Endgerät 1 mit eine Bildschirm 1a und darauf angezeigten Icons 18, welches eine signalgebende Vorrichtung 2 enthält. Das mobile Endgerät, beispielsweise ein Personal Digital Assistant (PDA), ein Mobiltelefon, ein Smartphone, ein Tablet-PC oder ein ähnliches Gerät, ist geeignet, Kommunikationsverbindungen über einen Übertragungskanal zu anderen Geräten zum Zwecke der zwischenmenschlichen Kommunikation aufzubauen. Solche Kommunikationsverbindungen umfassen beispielsweise Telefonverbindungen, insbesondere drahtlose und leitungsgebundene, Internetverbindungen, Voice-over-IP-Verbindungen sowie beispielsweise Verbindungen zur Datenfernübertragung. Diese Geräte können zum Beispiel zur Verbindungsaufnahme mit mehreren Kommunikationsteilnehmern genutzt werden, beispielsweise in Web-Konferenzen oder Telefonkonferenzen.

Die signalgebende Vorrichtung 2 ist vorzugsweise in einem mobilen Endgerät 1 integriert, wobei diese beispielsweise von dessen technischen Einrichtungen wie z.B. der Antenne, der Stromversorgung, einer Anzeigevorrichtung etc. Gebrauch macht. Die Vorrichtung 2 kann jedoch eine eigenständige, gesonderte Vorrichtung sein, welche nicht Bestandteil eines mobilen Endgeräts ist.

Die signalgebende Vorrichtung 2 ist vorzugsweise problemlos zur Bewegung, insbesondere im Betriebsfall, durch einen Nutzer, beispielsweise durch Halten mit der Hand und Bewegen derselben, geeignet. Die signalgebendeVorrichtung 2 bzw. das diese aufnehmende mobile Endgerät 1 weist z.B. niedriges Gewicht und handliche Bauform auf und ist insofern vorzugsweise als Handgerät bzw. als portable Vorrichtung ausgebildet. Bewegungen in Pfeilrichtung 3 um eine Achse A sind beispielsweise ebenso möglich wie solche in Pfeilrichtung 4 um eine Achse B oder solche um eine Achse C. Darüber hinaus können z.B. Bewegungen mit der Signalgebenden Vorrichtung 2 vollführt werden, bei welcher diese in Längs- oder Querrichtung bzw. linear bewegt wird.

Die signalgebende Vorrichtung 2 enthält einen Sensor 5, zum Beispiel einen Beschleunigungssensor, welcher eine Bewegung der Signalgebenden Vorrichtung 2 - veranlasst durch eine Bewegung eines Nutzers - detektiert. Aufgrund einer detektierten Bewegung stellt der Sensor 5 ein Bewegungssignal BS an einem Ausgang 6 bereit bzw. liefert ein solches, siehe Fig. 2. Dieses mit der Bewegung korrespondierende Bewegungssignal BS wird einer Bewegungssignal-Verarbeitungsvorrichtung 7 zugeführt, bzw. von dieser abgerufen.

Die Bewegungssignal-Verarbeitungsvorrichtung 7 umfasst beispielsweise eine Recheneinheit, zum Beispiel eine computerisierte Recheneinheit, wie z.B. einen Signalprozessor 8. Die Bewegungssignal-Verarbeitungsvorrichtung 7 interpretiert das Bewegungssignal BS des Sensors 5 dahingehend, ob in dem Bewegungssignal BS ein Bewegungssignalmuster BSM vorliegt, welches einer Geste der nonverbalen zwischenmenschlichen Kommunikation, insbesondere der nonverbalen zwischenmenschlichen Kommunikation zuordenbar ist. Dazu kann die Bewegungssignal-Verarbeitungsvorrichtung 7 beispielsweise das Bewegungssignal BS mit definierten Bewegungssignalmustern BSM derartiger Gesten vergleichen, welche zum Beispiel in einer Speichervorrichtung 9 abgelegt und abrufbar sind bzw. der Bewegungssignal-Verarbeitungsvorrichtung 7 bekannt sind. Die Speichervorrichtung 9 kann Teil der Signalgebenden Vorrichtung 2, insbesondere Teil der Bewegungssignal-Verarbeitungsvorrichtung 7 sein, kann jedoch auch z.B. eine externe Datenquelle sein.

Ferner interpretiert die Bewegungssignal-Verarbeitungsvorrichtung 7 das Bewegungssignal BS vorzugsweise dahingehend, welcher Art die dem Bewegungssignal BS zuordenbare Geste ist. Derartige Gesten der nonverbalen zwischenmenschlichen Kommunikation sind zum Beispiel die des menschlichen Bemerkbarmachens infolge einer Bewegung eines Körperteils, wie: das Winken mit der Hand, das Schütteln der Hand, ein Schwenken der Hand/des Armes oder beispielsweise das Emporstrecken eines Armes (das Bewegungssignal BS einer Geste wird dabei durch Mitbewegen der gehaltenen Signalgebenden Vorrichtung 2 wie oben beschrieben erzeugt). Beliebige andere Arten derartiger Gesten sind jedoch denkbar. Derartige oben beschriebene zwischenmenschliche Gesten werden zum Beispiel dort erwartet, wo Nutzer der Signalgebenden Vorrichtung 2 auf sich aufmerksam machen wollen, z.B. in Konferenzen, in Notsituationen etc. Eine Geste könnte zum Beispiel das Herüberwinken eines Teilnehmers einer Konferenz sein, das Abgeben eines Gebots in einer Auktion durch Heben der Hand, ein Anklopfen bei einem Teilnehmer, welcher sein Kommunikationsgerät stummgeschaltet hat, die Meldung/Anmeldung bei der Moderationsleitung einer Konferenz, das Melden in einer Konferenz, um einen Gesprächswunsch zu signalisieren, die Deutung der Intensität eines Schüttelns als Emotion zur Bewertungsfunktion (wie zum Beispiel analog zum Klatschen), und zum Beispiel das Mischen einer Sortierung.

In dem Falle, in dem eine Zuordnung des Bewegungssignals BS zu einem definierten Bewegungssignalmuster BSM möglich ist bzw. erfolgt, gibt die Bewegungssignal-Verarbeitungsvorrichtung 7 ein Ausgangssignal AS aus, welches eine mit der Zuordnung korrespondierende Information enthält. Das Ausgangssignal AS enthält dabei zum Beispiel die Information, dass eine Geste der nonverbalen zwischenmenschlichen Kommunikation aufgrund des Bewegungssignals BS durch Zuordnung erkannt wurde bzw. vorliegt. Darüber hinaus kann das Ausgangssignal AS vorzugsweise auch eine Information enthalten, welche Art von Geste erkannt wurde bzw. vorliegt.

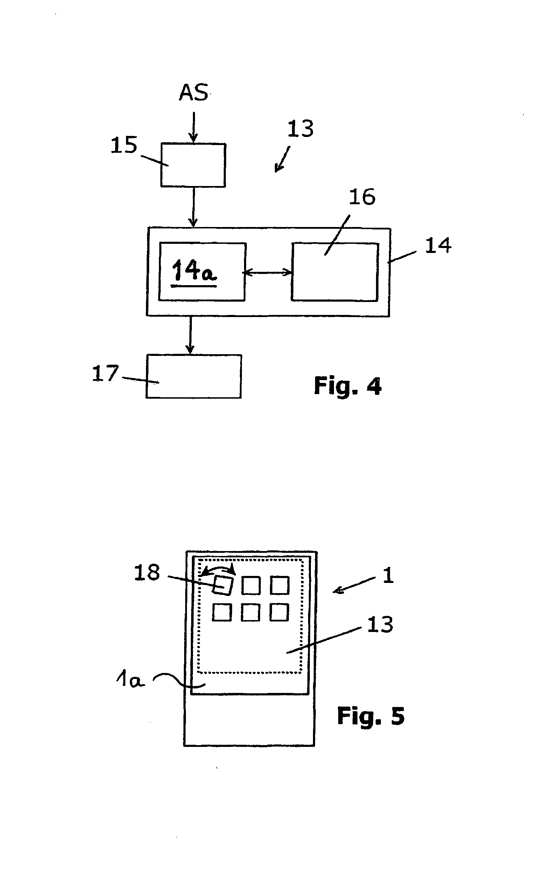

Die signalgebende Vorrichtung 2 enthält in einer beispielhaften bevorzugten Ausführungsform ferner eine Sendevorrichtung 10, welche das erzeugte Ausgangssignal AS mit der darin enthaltenen Information einem Übertragungskanal 11 zuführt, welcher zum Beispiel eine Verbindung zu einem weiteren mobilen Endgerät oder zum Beispiel einer anderen, der zwischenmenschlichen Kommunikation dienenden Einrichtung, herstellt bzw. gewährleistet. Insbesondere kann der Übertragungskanal zum Beispiel eine Verbindung mit einer im Zusammenhang mit Fig. 4 unten beschriebenen Signalisiervorrichtung 13 herstellen. Die Sendevorrichtung 10 kann dabei zum Beispiel übliche Mittel zum Aufbereiten des Ausgangssignales zum Zwecke der Übertragung wie etwa Mittel zur Codierung (z.B. D/A- oder A/D-Wandler) und/oder zur Verstärkung des Ausgangssignals, zur Filterung etc. aufweisen. Ferner kann die Sendevorrichtung 10 beispielsweise eine Antenne 11a oder einen Anschluss für einen leitungsgebundenen Übertragungskanal 11 aufweisen.

Der Übertragungskanal 11 kann ein in der Kommunikationstechnik üblicher Übertragungskanal sein, z.B. ein drahtloser in Form einer Funkstrecke oder ein leitungsgebundener oder beides. Der Übertragungskanal 11 kann auf vielerlei Art realisiert sein und zum Beispiel unter Verwendung üblicher Protokolle und Verfahren gebildet sein. Sowohl analoge als auch digitale Übertragungskanalformen sind denkbar. In der Regel ist der Übertragungskanal 11 zwischen einer Sendevorrichtung 10 und einer Empfangsvorrichtung gebildet, insbesondere wenn diese voneinander räumlich abgesondert bzw. entfernt sind.

Ein mögliches Bewegungssignal BS ist exemplarisch in Fig. 3 als Amplitude a(t) über der Zeit t dargestellt. Wie aus dem Verlauf der Kurvenform 12 zu sehen ist, reagiert der Sensor 5 auf eine bestimmte Bewegung der Signalgebenden Vorrichtung 2 zum Beispiel mit einer Frequenzänderung (Bereich B1) und einer veränderten (hier größeren) Amplitude a (Bereich B2) im Signalverlauf 12. Diese Änderungen im Signalverlauf 12 sind bei Wiederholen der bestimmten Bewegung reproduzierbar. Der reproduzierbar geänderte Signalverlauf 12 kann beispielsweise als Bewegungssignalmuster BSM, z.B. als Kurvenverlauf oder in digitalisierter Form gespeichert werden. Vorzugsweise werden zum Beispiel die über einem Schwellwert S liegenden Signalanteile erfasst (Clipping, Abschneiden der Signalspitzen) und diese z.B. als digitales Bewegungssignal BS bereitgestellt, so dass einer Geste, die der bestimmten Bewegung des Bewegungssignals BS entspricht, zuordenbare Bewegungssignalmuster BSM erhalten werden können. Dargestellt ist auch ein Schwellwert S in Form einer gestrichelten Linie. Liegen die Bewegungssignalamplituden a(t) darunter, wird beispielsweise kein Bewegungssignal BS ausgegeben.

Die aus Bewegungssignalen BS erzeugten Bewegungssignalmuster BSM können in der Signalgebenden Vorrichtung 2 abgespeichert werden. Es ist jedoch auch denkbar, der Signalgebenden Vorrichtung 2 Bewegungssignalmuster BSM von einer externen Datenquelle zuzuführen, um die signalgebende Vorrichtung 2 zu einer dann möglichen Zuordnung der von der externen Datenquelle erhaltenen Bewegungssignalmuster BSM zu damit verbundenen Gesten zu befähigen. Die externe Datenquelle kann z.B. in Form einer Speicherkarte, einer Speichereinheit einer weiteren Signalgebenden Vorrichtung 2, einer Internet-/webbasierten oder einer Netzwerk-Speichereinheit, etc. realisiert sein. Auch liegt es im Rahmen der Erfindung, dass die signalgebende Vorrichtung 2 selbstlernend ist. Dies kann z.B. realisiert werden, indem ein Nutzer eine Geste der nonverbalen zwischenmenschlichen Kommunikation vollführt, während die signalgebende Vorrichtung 2 das dabei erzeugte Bewegungssignal BS mittels des Sensors 5 erfasst und als Bewegungssignalmuster BSM, z.B. in der Signalgebenden Vorrichtung 2, abspeichert. Auf diese Weise können nutzerspezifische Gesten erfasst werden.

Ferner ist es von der Erfindung umfasst, dass die signalgebende Vorrichtung 2 bewusste von unbewussten Gesten unterscheidet. Infolgedessen können Bewegungssignale BS unbewusster Gesten beispielsweise unterdrückt werden. Zu einer solchen Unterscheidung wird zum Beispiel die Intensität eines erfassten Signals herangezogen. Ist die Bewegung unbewusst, detektiert der Sensor 5 in der Regel ein schwaches Signal, da die Bewegungsamplituden bzw. die Signalintensität gering sind. Bleibt dieses Signal unter dem Schwellwert S, wird der Sensor kein Bewegungsignal BS ausgeben. In dem Fall jedoch, in dem ein starkes Signal infolge einer gewollten Bewegung bzw. einer bewussten Geste höherer Intensität durch den Sensor 5 erfasst wird, wird ein Bewegungssignal BS erzeugt. In diesem Fall liegen die Signalspitzen zum Beispiel über dem Schwellwert S (Bereich B2).

Das Ausgangssignal AS kann auch um weitere Informationen ergänzt wird, bevor es - z.B. über einen Übertragungskanal - zur Verfügung gestellt wird. So ist es z.B. sinnvoll eine Nutzerkennung anzufügen, um bei einem Empfänger des Ausgangssignals Hinweise auf den Absender des Signals ausgeben zu können. Diese Funktionalität kann beispielsweise durch einen erweiterten Funktionsvorrat der Bewegungssignal-Verarbeitungsvorrichtung 7 bzw. beispielsweise der Recheneinheit zur Verfügung gestellt werden. Denkbar sind auch zusätzliche, z.B. signalgebende oder signalformende, Elemente, die der Signalgebenden Vorrichtung 2 zu diesem Zweck zugeordnet sind.

Das Ausgangssignal AS, welches von der Signalgebenden Vorrichtung 2 erzeugt wurde und vorzugsweise die mit der detektierten Geste korrespondierende Information enthält, die aufgrund der erfolgten Zuordnung generiert wurde, wird zur Signalisierung beispielsweise an eine erfindungsgemäße Signalisiervorrichtung 13 (Fig. 4) weitergegeben. Die Weitergabe kann beispielsweise mittels einer Sendevorrichtung 10 über den Übertragungskanal 11 erfolgen. Denkbar ist jedoch auch, dass die Bewegungssignal-Verarbeitungsvorrichtung 7 das Ausgangssignal AS an einem Signalausgang zum Abruf durch die Signalisiervorrichtung 13 bereitstellt. Das ist z.B. dann denkbar, wenn die Signalisiervorrichtung 13 und die signalgebende Vorrichtung 2 in einer gemeinsamen Geräteeinheit, z.B. einem mobilen Endgerät 1 untergebracht sind, wobei einem die Bewegung verursachenden Nutzer die Information, die damit korrespondiert beispielsweise ebenfalls angezeigt werden kann.

Die Signalisiervorrichtung 13 ist vorzugsweise in einem mobilen Endgerät 1 der oben beschriebenen Art untergebracht. Die Signalisiervorrichtung 13 umfasst vorzugsweise eine Ausgangssignal-Verarbeitungsvorrichtung 14, welche das Ausgangssignal AS verarbeitet, welches an einem Signaleingang der Ausgangssignal-Verarbeitungsvorrichtung 14 erfasst wurde. Zur Erfassung kann die Signalisiervorrichtung 13 von einer Empfangsvorrichtung 15 Gebrauch machen, z.B. von einer in der Signalisiervorrichtung 13 angeordneten Empfangsvorrichtung 15. Die Empfangsvorrichtung 15 kann auf übliche Weise gebildet sein und in Abhängigkeit z.B. des genutzten Übertragungskanals Filter, Verstärkerelemente, Antennenelemente, A/D-, D/A-Wandler etc. aufweisen. Das von der Empfangsvorrichtung 15 erfasste Ausgangssignal AS wird vorzugsweise der Ausgangssignal-Verarbeitungsvorrichtung 14 zur Verfügung gestellt.

Die Ausgangssignal-Verarbeitungsvorrichtung 14 weist beispielsweise eine Recheneinheit z.B. in Form eines Signalprozessors 14a auf, welcher die in dem Ausgangssignal AS enthaltene, mit der erfolgten Zuordnung des Bewegungssignals BS zu einer Geste korrespondierende Information aus dem Ausgangssignal AS gewinnt. Zur Informationsgewinnung aus dem Ausgangssignal AS kann zusätzlich zu der Recheneinheit beispielsweise eine Speichervorrichtung 16 vorgesehen sein, z.B. in der Signalisiervorrichtung 13 oder der Ausgangssignal-Verarbeitungsvorrichtung 14, deren Speicherinhalt eine Zuordnung des erhaltenen Ausgangssignals AS zu definierten gestenspezifischen Informationsinhalten ermöglicht. Bei Erhalt eines Ausgangssignales AS vergleicht die Ausgangssignal-Verarbeitungsvorrichtung 14 beispielsweise das Ausgangssignal mit in der Speichervorrichtung 16 gespeicherten Signalmustern und ruft bei Übereinstimmung bzw. erfolgreicher Zuordnung von Ausgangssignal und gespeichertem Signalmuster die dem gespeicherten Signalmuster zugeordnete gespeicherte Information zur Signalisierung bzw. Ausgabe ab, woraufhin das Ausgangssignal AS auf Seite der Signalisiervorrichtung dekodiert ist.

Nach Gewinnung der Information aus dem Ausgangssignal AS, wird die Information durch die Ausgangssignal-Verarbeitungsvorrichtung 14 vorzugsweise derart als Signal aufbereitet, dass die Information über eine dazu vorgesehene Ausgabevorrichtung ausgegeben werden kann, z.B. an einen menschlichen Nutzer bzw. Kommunikationsteilnehmer.

Als weiteren Bestandteil enthält die Signalisiervorrichtung zu diesem Zweck vorzugsweise eine Ausgabevorrichtung 17 zur Ausgabe der zu signalisierenden Information. Das aufbereitete Informationssignal wird der Ausgabevorrichtung von einem Ausgang der Ausgangssignal-Verarbeitungsvorrichtung 14 zur Verfügung gestellt bzw. geliefert. Die Ausgabevorrichtung 17 kann dabei in herkömmlicher Weise eine bildgebende Vorrichtung wie z.B. ein Bildschirm sein, ein schallgebendes Element wie etwa ein Lautsprecher, ein haptische Reize auslösendes Element, wie z.B. eine Vibrationsvorrichtung oder eine übliche zur Signalgebung an einen menschlichen Nutzer geeignete Vorrichtung oder eine Kombination mehrerer solcher Elemente.

Zur Visualisierung der Information ist beispielsweise in einem mobilen Endgerät 1 vorgesehen, auf einem Bildschirm 1a der Signalisiervorrichtung 13 bei Empfang eines Ausgangssignals AS, welches die Information des Vorliegens einer Meldungsgeste wie dem Strecken eines Armes eines Nutzers enthält, ein Icon 18 in Schwenkbewegung zu versetzen (siehe Fig. 5). Desweiteren ist vorgesehen, die Signalisiervorrichtung 13 infolge einer solchen Geste zum Beispiel vibrieren zu lassen, um den Nutzer der Signalisiervorrichtung 13 vom Vorliegen einer solchen Geste in Kenntnis zu setzen. Eine mögliche Form der Informationswiedergabe kann z.B. auch darin liegen, auf eine eingehende Meldungsgesteninformation mit einer Hell-Dunkel-Tastung des Bildschirms der Signalisiervorrichtung zu reagieren, z.B. in Kombination mit der Anzeige einer Teilnehmerkennung.

In dem Fall, in dem das empfangene Ausgangssignal AS zusätzliche Informationen enthält, kann die Ausgangssignal-Verarbeitungsvorrichtung 14 beispielsweise ein aufbereitetes Signal ausgeben, welches die zusätzlichen Informationen ebenfalls zur Ausgabe, insbesondere mittels der Ausgabevorrichtung 17 bringt, beispielsweise ein Signal, welches einen Hinweis auf den Nutzer gibt, welcher die Geste vollführt bzw. das Ausgangssignal AS / das Bewegungssignal BS verursacht.

Die Signalisiervorrichtung 13 ist vorzugsweise so ausgebildet, dass sie auf eine externe Datenquelle, welche Gesteninformation mit zugrundeliegenden Ausgangssignalmustern verknüpft, zurückgreifen kann. Die externe Datenquelle kann in Form einer Speicherkarte, einer Speichereinheit einer weiteren Signalgebenden Vorrichtung 2, einer Internet-/webbasierten oder einer Netzwerk-Speichereinheit, etc. realisiert sein. Auch liegt es im Rahmen der Erfindung, dass die Signalisiervorrichtung 2 selbstlernend ist.

Es ist auch denkbar, die Signalisiervorrichtung 13 so auszubilden, dass sie keine Ausgangssignalverarbeitungsvorrichtung 14 enthält. Steht z.B. am Ausgang der Bewegungssignal-Verarbeitungsvorrichtung 7 bereits ein zur Ausgabe mittels Ausgabevorrichtung 17 geeignet aufbereitetes Ausgangssignal AS zur Verfügung, welches direkt an diese weitergegeben wird, ist eine erneute Verarbeitung des Ausgangssignals AS durch eine Ausgangssignal-Verarbeitungsvorrichtung 14 zum Beispiel nicht notwendig. Eine solche Lösung ist z.B. dann sinnvoll, wenn die signalgebende Vorrichtung 2 und die Signalisiervorrichtung 13 in einer gemeinsamen Geräteeinheit, z.B. in einem gemeinsamen mobilen Endgerät 1, untergebracht sind. Ein Übertragen über einen Übertragungskanal 11 könnte hierbei entfallen.

Bei dem erfindungsgemäßen Signalgebungsverfahren wird in einem ersten Schritt eine Bewegung der Signalgebenden Vorrichtung 2 detektiert, zum Beispiel via Sensor 5, und ein korrespondierendes Bewegungssignal BS ausgegeben. Das Bewegungssignal BS wird wie oben beschrieben erzeugt durch Bewegen der zum Beispiel in einem mobilen Endgerät 1 untergebrachten Signalgebenden Vorrichtung 2, z.B. um eine Achse A oder B oder in Richtung einer derselben etc.

In einem weiteren Schritt wird das Bewegungssignal BS einer Geste zugeordnet, welche der Gestik der nonverbalen zwischenmenschlichen Kommunikation angehört. Dies kann durch Vergleich von Bewegungssignalmustern BSM mit dem Bewegungssignal BS wie oben beschrieben erfolgen.

In einem letzten Schritt wird ein Ausgangssignal AS generiert, welches eine Information enthält, welche mit der infolge der Zuordnung detektierten Geste korrespondiert. Dieses Ausgangssignal AS kann in einem weiteren Schritt über einen Übertragungskanal 11 gesendet werden. Dazu wird auf die obigen Ausführungen verwiesen.

Das erfindungsgemäße Signalisierverfahren enthält den Schritt des Generierens einer Information aufgrund des Ausgangssignals AS sowie des Ausgebens, z.B. über eine Ausgabevorrichtung 17, der Information, welche in dem Ausgangssignal AS enthalten ist und mit der Geste der nonverbalen zwischenmenschlichen Kommunikation korrespondiert.

Alternativ kann der Schritt des Generierens einer Information entfallen, wenn z.B. das Ausgangssignal AS direkt an eine Ausgabevorrichtung 17 in geeignet aufbereiteter Weise weitergegeben werden kann. Dazu wird auf die obigen Ausführungen verwiesen.

In einem möglichen weiteren Schritt, welcher dem Schritt des Generierens von Information bzw. dem der Ausgabe vorausgehen kann, wird das Ausgangssignal AS, welches über einen Übertragungskanal übertragen wurde, zum Beispiel von einer Empfangsvorrichtung 15, empfangen, wie oben diskutiert.

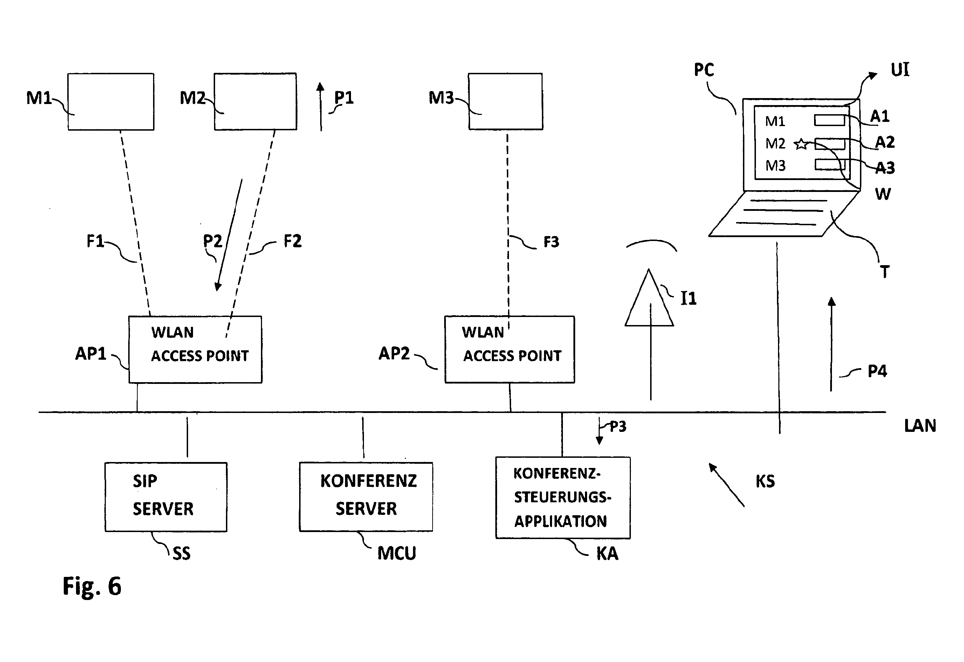

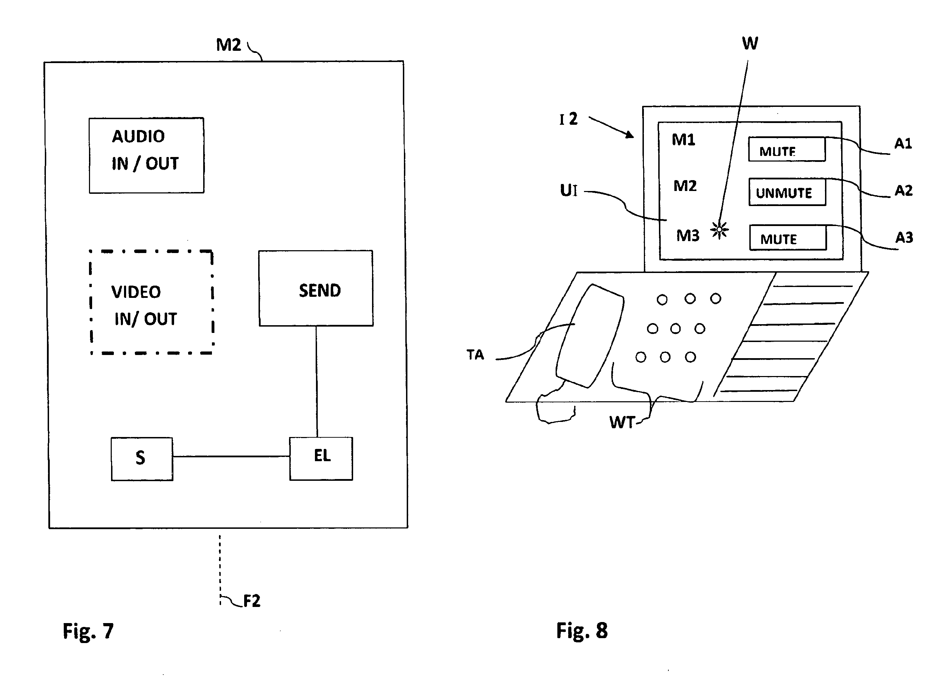

Fig. 6 zeigt eine erste Ausführungsform eines moderierten Konferenzsystems KS mit drei mobilen Endgeräten M1, M2 und M3, die jeweils gleich aufgebaut sind, wie sie am Beispiel des mobilen Endgerätes M2 unten in Verbindung mit Fig. 7 beschrieben sind. Die beiden mobilen Endgeräte M1 und M2 sind über eine Funkübertragungsstrecke F1 bzw. F2 mit einem ersten WLAN Access Point AP1 verbunden, der an eine Local Area Network LAN angeschlossen ist. Das dritte mobile Endgerät M3 ist über die Funkübertragungsstrecke F3 mit einem zweiten WLAN Access Point AP2 verbunden, der ebenfalls mit demselben Local Area Network LAN verbunden ist.

An dem Local Area Network LAN sind weiterhin ein SIP Server SS, ein Konferenzserver MCU, der z. B. nach dem Standard ITU-T H.323 (09/99), Abschnitte 6.7 und 6.8 ausgebildet ist, eine Konferenz-Steuerungsapplikation KA, ein IP-Telefon I1 und ein Personal Computer PC mit einer Tastatur T angeschlossen. Der Konferenzserver ist zuständig für das Mischen der Media (Audio, Video) und das Verteilen des Medienstroms an die mobilen Endgeräte M1 bis M3 der Teilnehmer.

Der Personal Computer PC weist einen Touch Screen als Bildschirm auf, der als Touch User Interface UI zur Konferenzsteuerung vom Moderator gesteuert wird. Die Anzeige auf dem Touch Screen UI benutzt beispielsweise das Webprotokoll nach dem IETF-Standard Hypertext Transfer Protocol-http/1.1 RFC 2616 (1999-06). Auf dem Touch Screen UI werden auf speziellen Anzeigefeldem A1, A2 und A3 die jeweiligen Schaltzustände "mute" (stumm) und "unmute" (laut) sowie eventuelle Wortmeldungen mittels eines speziellen Symbols W für die mobilen Endgeräte angezeigt - siehe größere Darstellung auf dem Touch Screen UI eines alternativen Internettelefons 12, das in Fig. 8 dargestellt ist. In Fig. 8 ist eine alternative Ausführungsform eines Internettelefons I2 dargestellt (bei dem ein Personal Computer PC entfällt), das einen Telefonapparat TA mit einem Wähltastenfeld WT sowie ein Touch-Bildschirm mit einem Touch User Interface UI aufweist, bei dem M1 und M3 "mute" und M2 "unmute" geschaltet ist. Für M3 liegt die Wortmeldung M vor.

Wie aus Fig. 7 ersichtlich, enthält jedes mobile Endgerät M1, M2 und M3, dargestellt ist nur das mobile Endgerät M2, eine "Audio IN/OUT"-Einheit zum Telefonieren und wahlweise alternativ bzw. zusätzlich eine "Video IN/OUT"-Einheit zur Darstellung von Videoaufnahmen der Konferenzschaltung. Weiterhin ist ein Sensor S vorhanden, der z.B. als Bewegungs- bzw. Beschleunigungssensor S (entspricht dem Sensor 5 im mobilen Endgerät 1 der Fig. 1) ausgebildet ist.

Eine Auswertlogik bzw. Erkennungslogik EL (entspricht der Bewegungssignal-Verarbeitungsvorrichtung 7 der signalgebenden Vorrichtung 2 in den Fig. 1 und 2) wertet die erkannten Bewegungen entsprechend aus, dessen Ausgangssignal (entspricht AS in Fig. 2) von der Sendeeinheit SEND (entspricht 10 in Fig. 2) als INFO-Meldung neben den Audio-/Videosignal über die Funkstrecke F2 übertragen wird.

Bei dem moderierten Konferenzsystem KS erfolgt die Zu- oder Wegschaltung (Laut- oder Stummschaltung) der mobilen Endgeräte M1, M2 und M3 der Teilnehmer vom Moderator am Personal Computer PC. Der Moderator hat die Übersicht über sämtliche Teilnehmer und kann dann über eine mit dem Konferenzsystem KS verbundene Steuerungsapplikation diese Funktion ausführen und sozusagen das Wort erteilen. Bei dem erfindungsgemäßen Konferenzsystem KS besteht nun der Vorteil, dass stummgeschaltete Teilnehmer der Konferenz nun eine Wortmeldung machen können. Eine solche Wortmeldung kann nun von jedem mobilen Endgerät M1, M2 bzw. M3 mit einer Gestik z.B. Schütteln oder ruckartiges Hochheben, z.B. als Handheben, getätigt werden.

Dabei wird mittels des Bewegungssensors S im mobilen Kommunikationsendgerät M2 (siehe Fig. 7) eine Bewegung festgestellt und mittels einer Auswertungslogik bzw. Erkennungslogik EL bewertet, um die Gestik zu erkennen, z.B. ein Handheben als schnelle Bewegung in Richtung des Pfeils P1 - wie in Fig. 1 dargestellt. Diese Information wird nun z.B. in Form einer INFO-Message (Standard RFC 2976) in Richtung des Pfeiles P2 zum WLAN Access Point AP2 übertragen und dann über die SIP Signalisierung des SIP-Servers SS an die Konferenzsteuerungsapplikation KA (Pfeil P3) gesendet. Diese kann nun das "Handheben" von M2 semantisch als Wortmeldung interpretieren und an das Touch User Interface UI auf dem Personal Computer PC des Moderators in Richtung des Pfeiles P4 weiterleiten und als Symbol W darstellen. Sämtliche Kommunikation basiert hier auf dem Internet Protokoll (IPv4 oder IPv6). Die Mobilen Endgeräte sind dabei über Wireless LAN (WLAN, vgl. IEEE-802.11) verbunden. Die Endgeräte M1, M2 und M3 sowie auch das IP-Telefon I1 des Moderators sowie auch der Konferenz-Server MCU sind über das Session Initiation Protokoll (SIP, vgl. RFC 3261) beim zentralen SIP-Server registriert.

Der Moderator kann nach Anzeige der Wortmeldung (W) innerhalb der Konferenz-Bedienoberfläche am Touch User Interface UI mittels einer Aktion durch Berührung des Bildschirms am Touch User Interface UI im Bereich des Anzeigefeldes A2 eine Änderung der Stummschaltung zur Lautschaltung bzw. in umgekehrter Richtung des mobilen Endgerätes M2 eines Teilnehmers der Konferenz bewirken.

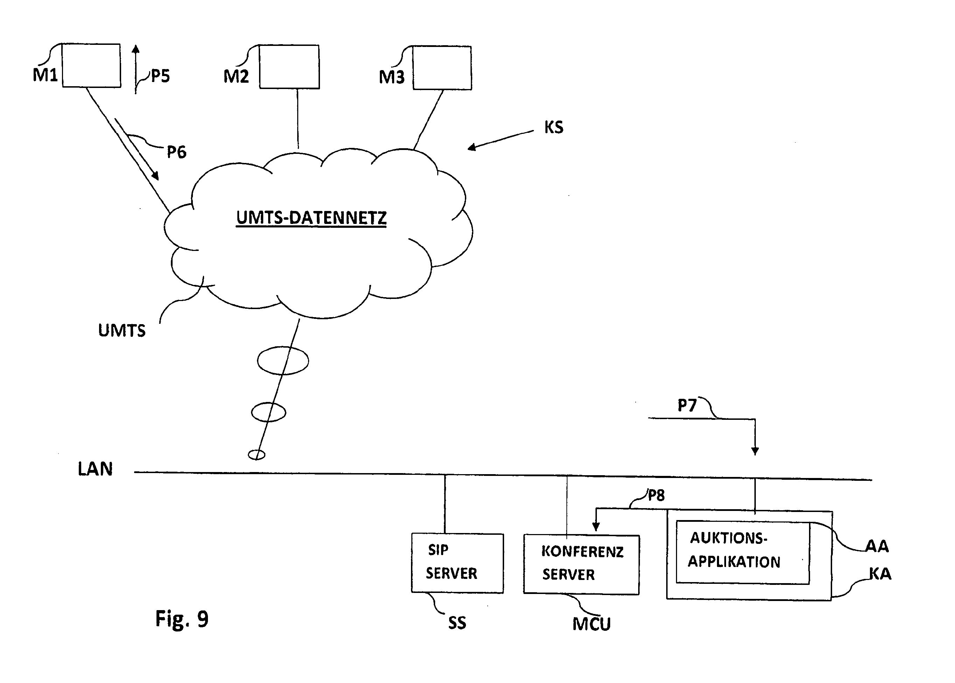

Alternativ kann für das Konferenzsystem KS eine Übertragung von den mobilen Endgeräten M1, M2 und M3 zum Local Area Network LAN auch über ein UMTS-Datennetz CUMTS anstelle eines WLAN Access Points AP1 bzw. AP2 erfolgen, wie es in Fig. 9 gezeigt wird.

Alternativ kann die Information "Handheben" auch in das Audio-Signal (ggfs. nicht hörbar) aufmodelliert werden.

Bei einer abgewandelten ersten Ausführungsform des erfindungsgemäßen Konferenzsystems KS kann in einfacher Weise eine Abstimmung der Teilnehmer durchgeführt werden. Die Anordnung ist ähnlich wie in Fig. 6 dargestellt - allerdings wird nun bei einer Abstimmung z.B. mittels eines Lagesensors ein aufrechtes Halten des mobilen Endgerätes dann von der Konferenz-Steuerungsapplikation KA als "JA" interpretiert, ein Halten im Querformat wird als "NEIN" interpretiert und wiederum bei allen Teilnehmern M1 bis M3 innerhalb der Konferenz-Bedienoberfläche am Touch User Interface UI in den Anzeigeflächen A1 bis A3 entsprechend dargestellt.

Eine zweite in Fig. 9 dargestellte Ausführungsform des erfindungsgemäßen Konferenzsystems KS - ähnlich wie in Fig. 6 - stellt eine Auktion dar. Innerhalb des Konferenzsystems KS wird z.B. von einem Moderator ein Objekt beschrieben ggfs. auch mit Videoübertragung an die Teilnehmer. Alternativ kann diese Beschreibung auch von einem Automaten mit elektronischer Sprachausgabe (synthesierte Sprache) erfolgen. Beginnt nun die Auktion, können die Teilnehmer das Gebot erhöhen - ähnlich wie in einer echten Auktion - und zwar durch Handzeichen, d.h. z.B. durch schnelles Heben des mobilen Endgerätes M1 in Richtung des Pfeiles P5. Hierbei wird wiederum eine entsprechende Info-Meldung "Handheben" zum UMTS-Datennetz in Richtung des Pfeiles P6 und weiter in Richtung des Pfeiles P7 an die Konferenzsteuerungsapplikation KA gesendet. KA hat eine spezielle Auktionsapplikation AA mit einer "Text to Speech"-Komponente implementiert und interpretiert die Meldung "Handheben" als Gebot, wodurch eine Preiserhöhung um einen bestimmten Betrag erfolgt, wobei die Ansage des neu gebotenen Preises mittels "Text to Speech"-Komponente durch eine Übertragung vom Auktionator, der den Moderator des Konferenzsystems KS bildet, in Richtung des Pfeiles P8 zum Konferenzserver MCU erfolgt. An den LAN ist ein Internet Telefon I1 und ein Personal Computer PC - wie in Fig. 1 dargestellt - bzw. ein Internettelefon I2 - wie in Fig. 8 dargestellt - angeschlossen, das jedoch in der Fig. 9 nicht speziell dargestellt ist.

Im Falle einer komplett automatisierten Auktion wird die Konferenz-Steuerungsapplikation KA sämtliche Funktionen des Auktionators übernehmen, d.h. auch die Sprachansagen - eine visuelle Anzeige wäre dann nicht notwendig. Der nach dem Gebot erhöhte Preis wird akkustisch angesagt, z. B. "100 Euro von Teilnehmer 2".... Zum Ersten, zum Zweiten und zum Dritten. Alle Teilnehmer der Auktion hören diese Ansage.

Bei einer nicht dargestellten weiteren Ausführungsform eines Konferenzsystems KS werden Gesten innerhalb einer Videokonferenz verwendet, z.B. mittels der Geste "Handheben", die nun von der an der Kamera im Video-Endgerät verbundenen Auswerte-Erkennungslogik EL analysiert wird. Wird diese Gestik erkannt, wird ebenso eine INFO-Meldung Handheben" erzeugt. Weitere Beispiele von Gesten die über Video erkannt werden: Kopfschütteln, Kopfnicken, Fingerzeichen, z.B. Daumen nach oben, Daumen nach unten.

Die erkannte Geste wird über den SIP-Server wiederum an die Konferenz-Steuerungsapplikation KA übertragen, die abhängig von der Anwendung eine weitere Interpretation und Weiterverarbeitung vornimmt, z.B. Interpretation von Daumen nach oben oder Kopfnicken als Zustimmung bei einer Abstimmung.

Eine weitere Möglichkeit für eine Aktion nach Interpretation eines Handzeichens ist z.B. das Umschalten des Videosignals, das von allen Teilnehmern gesehen wird, der das Wechseln des Präsentationsmodus in einer assoziierten Collaborations-Verbindung (z.B. Anzeigen von Bildschirminhalten bei Durchführung von Präsentationen) darstellt.

## Patentansprüche

1. Konferenzsystem (KS), umfassend:
- mindestens zwei mobile Endgeräte (1, M1, M2, M3) mit jeweils einer signalgebenden Vorrichtung (2), enthaltend
- einen Sensor (5, S), welcher eine Bewegung der signalgebenden Vorrichtung (2) detektiert und ein korrespondierendes Bewegungssignal (BS) ausgibt,
- eine Bewegungssignal-Verarbeitungsvorrichtung (7, EL), die das Bewegungssignal (BS) einer Geste der nonverbalen zwischenmenschlichen Kommunikation einem Bewegungssignalmuster (BSM) zuordnet und infolge einer erfolgten Zuordnung ein Ausgangssignal (AS) mit einer korrespondierenden Information über die Art der detektierten Geste der nonverbalen zwischenmenschlichen Kommunikation erzeugt, wobei die signalgebende Vorrichtung (2) Bewegungssignalmuster (BSM) von einer externen Datenquelle verarbeitet und/oder speichert, die nicht Bestandteil der signalgebenden Vorrichtung (2) ist;
- eine Sendevorrichtung (10,S) zur Zuführung des Ausgangssignals (AS) zu einem Übertragungskanal (11, F1, F2, F3);
- mindestens einem jedem mobilen Endgerät (1, M1, M2, M3) jeweils zugeordneten Übertragungskanal (11, F1, F2, F3, UMTS);
- ein mit dem jeweiligen Übertragungskanal (11, F1, F2, F3, UMTS) verbundenes Local Area Network (LAN);
- einem an das Local Area Network (LAN) angeschlossenes Telefon vorzugsweise einem IP-Telefon (11, 12) für einen Moderator; und
- einem an das Local Area Network (LAN) angeschlossenem Bildschirm (UI) zur Konferenzsteuerung, wobei an dem Bildschirm das Ausgangssignal (AS) mit der korrespondierenden Information über die Art der detektierten Geste der nonverbalen zwischenmenschlichen Kommunikation angezeigt wird;
- eine Laut- oder Stummschaltung der mobilen Endgeräte zur Konferenzsteuerung durch den Moderator des Konferenzsystems.

2. Konferenzsystem (KS) nach Anspruch 1, **dadurch gekennzeichnet, dass** das Ausgangssignal der signalgebenden Vorrichtung (2) zusätzliche Informationen enthält, die einen Hinweis auf den Verursacher des Bewegungssignals geben.

3. Konferenzsystem (KS) nach Anspruch 1 oder 2, **dadurch gekennzeichnet, dass** die Bewegungssignal-Verarbeitungsvorrichtung (7,EL) der signalgebenden Vorrichtung (2) geeignet ist, die menschlichen nonverbalen Gesten des Bemerkbarmachens, insbesondere des Winkens und/oder Schüttelns und/oder einer Meldung, infolge Bewegung der im mobilen Endgerät (1, M1, M2, M3) enthaltenen signalgebenden Vorrichtung (2) zu detektieren.

4. Konferenzsystem (KS) nach einem oder mehreren der vorhergehenden Ansprüche, **dadurch gekennzeichnet, dass** das Bewegungssignal einer Geste einem der signalgebenden Vorrichtung (2) bekannten bzw. einem darin gespeicherten, insbesondere nutzerspezifischen Bewegungssignalmuster (BSM) zuordnet und/oder diese in der signalgebenden Vorrichtung (2), insbesondere zur erneuten Zuordnung abspeichert.

5. Konferenzsystem (KS) nach einem oder mehreren der vorhergehenden Ansprüche, **dadurch gekennzeichnet, dass** der Sensor (5, S) und/oder die Bewegungssignal-Verarbeitungsvorrichtung (7, EL) so ausgebildet ist, dass unbewusste Gesten der nonverbalen zwischenmenschlichen Kommunikation unterdrückt werden, so dass diese kein Bewegungssignal (BSM) und/oder Ausgangssignal (AS) zur Folge haben.

6. Konferenzsystem (KS) nach einem oder mehreren der vorhergehenden Ansprüche, **dadurch gekennzeichnet, dass** der Übertragungskanal (11, F1, F2, F3) durch ein WLAN-Netz mit einem WLAN Access Point (AP1, AP2) oder ein UMTS-Daten-Netz (UMTS) gebildet ist.

7. Konferenzsystem (KS) nach einem oder mehreren der vorhergehenden Ansprüche, **dadurch gekennzeichnet, dass** jeweils eine Signalisiervorrichtung (13) in den mindestens zwei mobilen Endgeräten (1, M1, M2, M3) eine Ausgabevorrichtung (17) enthalten ist, welche die Information des Ausgangssignals (AS) visuell auf einem Bildschirm (1a) bzw. akustisch bzw. haptische Reize erzeugt, insbesondere Vibration ausgibt, die mit der Geste der nonverbalen zwischenmenschlichen Kommunikation korrespondiert.

8. Konferenzsystem (KS) nach einem oder mehreren der vorhergehenden Ansprüche, **dadurch gekennzeichnet, dass** der an das Local Area Network (LAN) angeschlossene Bildschirm als Touch User Interface (UT) ausgebildet ist, der in einem Personal Computer (PC) oder in einem vorzugsweise als IP-Telefon (I2) ausgebildeten Telefon angeordnet ist.

9. Konferenzsystem (KS) nach einem oder mehreren der vorhergehenden Ansprüche, **dadurch gekennzeichnet, dass** das Konferenzsystem (KS) weiterhin umfasst:
- einen SIP-Server (SS);
- einen Konferenzserver (MCU); und
- eine Konferenzapplikation (KA);
wobei der SIP-Server (SS), der Konferenzserver (MCU) und die Konferenzsteuerungsapplikation (KA) mit dem Local Area Network (LAN) verbunden sind.

10. Signalgebungsverfahren für ein Konferenzsystem nach einem der vorhergehenden Ansprüche, enthaltend die Schritte:
- Detektieren einer Bewegung der signalgebenden Vorrichtung (2) und Ausgeben eines Bewegungssignals (BS), wobei die signalgebende Vorrichtung (2) Bewegungssignalmuster (BSM) von einer externen Datenquelle verarbeitet und/oder speichert, die nicht Bestandteil der signalgebenden Vorrichtung (2) ist;
- Zuordnen des Bewegungssignals (BS) zu einer Geste der nonverbalen zwischenmenschlichen Kommunikation;
- Erzeugen eines Ausgangssignals (AS) im Falle einer erfolgten Zuordnung, welches eine Information enthält, die mit der Geste der nonverbalen zwischenmenschlichen Kommunikation korrespondiert;
- Senden des Ausgangssignals über den Übertragungskanal (10; F1, F2, F3; UMTS);
- Empfangen des Ausgangssignals (AS), welches über den Übertragungskanal (10; F1, F2, F3; UMTS) übertragen wird, und Anzeigen jeweils einer entsprechenden zu einem mobilen Endgerät (1, M1, M2, M3) zugeordneten Markierung (W) auf einem Bildschirm (UI) zur Konferenzsteuerung, wobei an dem Bildschirm das Ausgangssignal (AS) mit der korrespondierenden Information über die Art der detektierten Geste der nonverbalen zwischenmenschlichen Kommunikation angezeigt wird;
- eine Laut- oder Stummschaltung der mobilen Endgeräte zur Konferenzsteuerung durch den Moderator des Konferenzsystems.

11. Signalgebungsverfahren für ein Konferenzsystem (KS) nach Anspruch 10, bei dem der Schaltzustand "mute" bzw. "unmute" des jeweiligen mobilen Endgerätes (1; M1, M2, M3) zusätzlich auf dem Bildschirm (UI) zur Konferenzsteuerung auf Anzeigefeldern (A1, A2, A3) angegeben wird und wahlweise z. B. in Abhängigkeit der Markierung (W) geändert werden kann, wobei dieses Umschalten automatisch bzw. manuell durch einen Moderator vorgenommen werden kann.

12. Verwendung des Signalgebungsverfahrens für ein Konferenzsystem (KS) nach Anspruch 10 oder 11 als Abstimmungsverfahren, wobei zwei unterschiedliche Bewegungsformen der signalgebenden Vorrichtung (2) vorzugsweise mit einem Lagesensor als eine "Ja"/"Nein"-Entscheidung ausgewertet werden.

13. Verwendung des Signalgebungsverfahrens für ein Konferenzsystem (KS) nach Anspruch 10 oder 11 als Auktionsverfahren mit einer speziellen Auktionsapplikation (AA), bei dem eine "Handheben"-Bewegung des mobilen Endgerätes (1, M1, M2, M3) eines Teilnehmers als Gebot mit einer Preiserhöhung um einen bestimmten Betrag ausgewertet wird, wobei die Ansage des neu gebotenen Preises mit einer Ansage des Moderators bzw. einer "Text to speech" Komponente an die Teilnehmer erfolgen kann.

14. Verwendung des Signalgebungsverfahren für ein Konferenzsystem (KS) nach Anspruch 10 oder 11, bei dem eine Videokonferenz durchgeführt wird, wobei Gesten der Teilnehmer, wie z.B. Handheben, Kopfschütteln, Kopfnicken und Fingerzeichen ausgewertet und an das Übertragungssystem (1, F1, F2, F3, UMTS) weitergeleitet werden.

## Claims

1. Conference system (KS), comprising:
- at least two mobile terminals (1, M1, M2, M3) with in each case one signalling apparatus (2), containing
- a sensor (5, S), which detects motion of the signalling apparatus (2) and outputs a corresponding motion signal (BS),
- a motion signal processing device (7, EL) which associates the motion signal (BS) of a gesture of nonverbal interhuman communication with a motion signal pattern (BSM) and, as a result of an association having been made, generates an output signal (AS) with a corresponding piece of information about the type of detected gesture of nonverbal interhuman communication, wherein the signalling apparatus (2) processes and / or saves motion signal patterns (BSM) from an external data source which is not part of the signalling apparatus (2),
- a transmission apparatus (10, S) to supply the output signal (AS) to a transmission channel (11, F1, F
- 2, F3),
- at least one transmission channel (11, F1, F2, F3, UMTS) allocated in each case to each mobile terminal (1, M1, M2, M3);
- a Local Area Network (LAN) connected to the particular transmission channel (11, F1, F2, F3, UMTS);
- a telephone connected to the Local Area Network (LAN), preferably an IP telephone (I1, I2) for a moderator; and
- a screen (UI) connected to the Local Area Network (LAN) for conference control,
wherein on the screen, the output signal (AS) is displayed with the corresponding piece of information about the type of detected gesture of nonverbal interhuman communication;
- an unmute or mute switching of the mobile terminals for conference control by the moderator of the conference system.

2. Conference system (KS) according to claim 1, **characterised in that** the output signal of the signalling apparatus (2) contains additional pieces of information which give an indication of the party causing the motion signal.

3. Conference system (KS) according to claim 1 or 2, **characterised in that** the motion signal processing apparatus (7, EL) of the signalling apparatus (2) is suitable for detecting the human nonverbal gestures for getting attention, in particular waving and / or shaking and / or a message, due to motion of the signalling apparatus (2) contained in the mobile terminal (1, M1, M2, M3).

4. Conference system (KS) according to any one of the preceding claims, **characterised in that** the motion signal of a gesture associates with a motion signal pattern (BSM) known to the signalling apparatus (2) or to one saved in it, in particular a user-specific one, and / or saves it in the signalling apparatus (2), in particular for a further association.

5. Conference system (KS) according to any one of the preceding claims, **characterised in that** the sensor (5, S) and / or the motion signal processing apparatus (7, EL) is made in such a way that unknown gestures of nonverbal interhuman communication are suppressed so that they do not result in a motion signal (BSM) and / or output signal (AS).

6. Conference system (KS) according to any one of the preceding claims, **characterised in that** the transmission channel (11, F1, F2, F3) is formed by a WLAN network with a WLAN access point (AP1, AP2) or a UMTS data network (UMTS).

7. Conference system (KS) according to any one of the preceding claims, **characterised in that** in each case one signalling apparatus (13) is contained in the at least two mobile terminals (1, M1, M2, M3) and one output apparatus (17) which generates the information of the output signal (AS) visually on a screen (1 a) or acoustically or generates haptic stimuli, in particular vibration, which corresponds to the gesture of the nonverbal interhuman communication.

8. Conference system (KS) according to any one of the preceding claims, **characterised in that** the screen connected to the Local Area Network (LAN) is made as a Touch User Interface (UT) which is arranged in a personal computer (PC) or in a telephone preferably in the form of an IP telephone (12).

9. Conference system (KS) according to any one of the preceding claims, **characterised in that** the conference system (KS) also comprises:
- an SIP server (SS);
- a conference server (MCU); and
- a conference application (KA),
wherein the SIP server (SS), the conference server (MCU) and the conference control application (KA) are connected to the Local Area Network (LAN).

10. Signalling method for a conference system according to any one of the preceding claims, containing the steps:
- Detection of a motion of the signalling apparatus (2) and output of a motion signal (BS), wherein the signalling apparatus (2) processes and / or saves motion signal patterns (BSM) from an external data source, which is not part of the signalling apparatus (2); association of the motion signal (BS) with a gesture of nonverbal interhuman communication;
- Generation of an output signal (AS) in the event of an association having been made, said signal containing a piece of information which corresponds to the gesture of nonverbal interhuman communication;
- Sending of the output signal by means of the transmission channel (10; F1, F2, F3; UMTS);
- Reception of the output signal (AS), which is transmitted by means of the transmission channel (10; F1, F2, F3; UMTS), and display in each case of a corresponding marking (W) associated with a mobile terminal (1, M1, M2, M3), on a screen (UI) for conference control, wherein on the screen, the output signal (AS) is displayed with the corresponding information about the type of detected gesture of nonverbal interhuman communication; an unmute or mute switching of the mobile terminals for conference control by the moderator of the conference system.

11. Signalling method for a conference system (KS) according to claim 10, in which the switching status "mute" or "unmute" of the particular mobile terminal (1; M1, M2, M3) is also indicated on display fields (A1, A2, A3) on the screen (UI) for conference control, and optionally can be changed for example depending on the marking (W), wherein this switchover can be carried out automatically or manually by a moderator.

12. Use of the signalling method for a conference system (KS) according to claim 10 or 11 as a coordination method, whereby two different forms of motion of the signalling apparatus (2) preferably with a position sensor are analysed as a "yes" / "no" decision.

13. Use of the signalling method for a conference system (KS) according to claim 10 or 11 as an auction method with a special auction application (AA), in which a "raising of the hand" movement of the mobile terminal (1, M1, M2, M3) of a participant is analysed as a bid with a price increase of a particular amount, wherein the bidding of the newly bid price can take place by a bidding of the moderator or a "text-to-speech" component to the participants.

14. Use of the signalling method for a conference system (KS) according to claim 10 or 11, in which a video conference is carried out, wherein gestures of the participants, such as hand-raising, head-shaking, head-nodding and finger-signals are analysed and forwarded to the transmission system (1, F1, F2, F3, UMTS).

## Revendications

1. Système de conférence (KS), comportant :
- au moins deux terminaux mobiles (1, M1, M2, M3) ayant chacun un dispositif générateur de signaux (2), contenant
- un capteur (5, S) qui détecte un mouvement du dispositif générateur de signaux (2) et délivre en sortie un signal de mouvement (BS) correspondant,
- un dispositif de traitement de signal de mouvement (7, EL) qui affecte le signal de mouvement (BS) d'un geste de la communication non verbale entre personnes à un modèle de signal de mouvement (BSM) et, suite à une affectation réussie, génère un signal de sortie (AS) ayant une information correspondante au sujet du type de geste détecté de la communication non verbale entre personnes, le dispositif générateur de signaux (2) traitant et/ou enregistrant des modèles de signal de mouvement (BSM) d'une source de données externe qui ne fait pas partie du dispositif générateur de signaux (2) ;
- un dispositif d'émission (10, S) servant à l'amenée du signal de sortie (AS) à un canal de transmission (11, F1, F2, F3) ;
- au moins un canal de transmission (11, F1, F2, F3, UMTS) affecté à chaque terminal mobile (1, M1, M2, M3) ;
- un réseau local (LAN) relié au dit canal de transmission (11, F1, F2, F3, UMTS) ;
- un téléphone relié au réseau local (LAN), de préférence un téléphone IP (11, 12), pour un modérateur ; et
- un écran (UI) relié au réseau local (LAN) en vue du contrôle de la conférence, le signal de sortie (AS) avec l'information correspondante sur le type de geste de la communication non verbale entre personnes étant affiché sur l'écran ;
- un dispositif de commutation non silencieux ou silencieux du terminal mobile en vue du contrôle de la conférence par le modérateur du système de conférence.

2. Système de conférence (KS) selon la revendication 1, **caractérisé en ce que** le signal de sortie du dispositif générateur de signaux (2) contient des informations supplémentaires qui donnent un avis sur la personne effectuant le signal de mouvement.

3. Système de conférence (KS) selon la revendication 1 ou 2, **caractérisé en ce que** le dispositif de traitement de signal de mouvement (7, EL) du dispositif générateur de signaux (2) est approprié pour détecter les gestes non verbaux de personne pour se faire remarquer, en particulier le signe de la main et/ou un hochement et/ou une demande d'intervention, suite au mouvement du dispositif générateur de signaux (2) contenu dans le terminal mobile (1, M1, M2, M3).

4. Système de conférence (KS) selon une ou plusieurs des revendications précédentes, **caractérisé en ce que** le signal de mouvement d'un geste est affecté à un modèle de signal de mouvement (BSM) connu du dispositif générateur de signaux (2) ou enregistré dans ce dernier, en particulier spécifique à l'utilisateur et/ou ce geste est stocké dans le dispositif générateur de signaux (2), en particulier en vue d'une nouvelle affectation.

5. Système de conférence (KS) selon une ou plusieurs des revendications précédentes, **caractérisé en ce que** le capteur (5, S) et/ou le dispositif de traitement de signal de mouvement (7, EL) est conçu de sorte que des gestes non intentionnels de la communication non verbale entre personnes soient ignorés de sorte que ceux-ci n'aient pas pour conséquence un signal de mouvement (BSM) et/ou un signal de sortie (AS).

6. Système de conférence (KS) selon une ou plusieurs des revendications précédentes, **caractérisé en ce que** le canal de transmission (11, F1, F2, F3) est formé par un réseau WLAN ayant un point d'accès de réseau WLAN (AP1, AP2) ou par un réseau de données UMTS (UMTS).

7. Système de conférence (KS) selon une ou plusieurs des revendications précédentes, **caractérisé en ce que** chaque dispositif de signalisation (13) dans lesdits au moins deux terminaux mobiles (1, M1, M2, M3) contient un dispositif de sortie (17) qui reproduit les informations du signal de sortie (AS) de manière visuelle sur un écran (1a) ou de manière acoustique, ou encore génère des stimulus haptiques, en particulier des vibrations, en correspondance avec le geste de la communication non verbale entre personnes.

8. Système de conférence (KS) selon une ou plusieurs des revendications précédentes, **caractérisé en ce que** l'écran, relié au réseau local (LAN), est formé en tant qu'interface utilisateur tactile (UT) et est disposé dans un ordinateur individuel (PC) ou dans un téléphone conçu de préférence en tant que téléphone IP (12).

9. Système de conférence (KS) selon une ou plusieurs des revendications précédentes, **caractérisé en ce que** le système de conférence (KS) comprend en outre :
- un serveur SIP (SS) ;
- un serveur de conférence (MCU) ; et
- une application de conférence (KA) ;
le serveur SIP (SS), le serveur de conférence (MCU) et l'application de contrôle de la conférence (KA) étant reliés au réseau local (LAN).

10. Procédé de génération de signaux pour un système de conférence selon l'une quelconque des revendications précédentes, comprenant les étapes suivantes :
- détection d'un mouvement du dispositif générateur de signaux (2) et sortie d'un signal de mouvement (BS), le dispositif générateur de signaux (2) traitant et/ou stockant des modèles de signal de mouvement (BSM) d'une source de données externe qui ne fait pas partie du dispositif générateur de signaux (2) ;
- affectation du signal de mouvement (BS) à un geste de la communication non verbale entre personnes ;
- génération d'un signal de sortie (AS) dans le cas d'une affectation réussie, lequel signal contient une information qui correspond au geste de la communication non verbale entre personnes ;
- envoi du signal de sortie par le biais du canal de transmission (10; F1, F2, F3; UMTS) ;
- réception du signal de sortie (AS) qui est transmis par le biais du canal de transmission (10; F1, F2, F3; UMTS) et affichage respectivement d'un repère (W) correspondant affecté à un terminal mobile (1, M1, M2, M3) sur un écran (UI) en vue du contrôle de la conférence, le signal de sortie (AS) étant affiché sur l'écran avec l'information correspondante sur le type du geste détecté de la communication non verbale entre personnes ;
- un circuit de commutation non silencieux ou silencieux des terminaux mobiles en vue du contrôle de la conférence par le modérateur du système de conférence.

11. Procédé de génération de signaux pour un système de conférence (KS) selon la revendication 10, dans lequel l'état d'activité « silencieux » respectivement « non silencieux » dudit terminal mobile (1; M1, M2, M3) est indiqué en plus dans des champs d'affichage (A1, A2, A3) sur l'écran (UI) en vue du contrôle de la conférence et peut être modifié au choix en fonction par exemple du repère (W), cette commutation pouvant être réalisée automatiquement ou manuellement par un modérateur.

12. Utilisation du procédé de génération de signaux pour un système de conférence (KS) selon la revendication 10 ou 11 en tant que procédure d'accord, deux formes de mouvements différentes du dispositif générateur de signaux (2) de préférence avec un capteur de position étant évaluées en tant que décision « oui » / « non ».

13. Utilisation du procédé de génération de signaux pour un système de conférence (KS) selon la revendication 10 ou 11 en tant que procédure d'accord ayant une application spéciale de vente aux enchères (AA) dans laquelle un mouvement de « levée de main » du terminal mobile (1, M1, M2, M3) d'un participant est évalué en tant qu'offre avec une augmentation de prix d'un montant déterminé, l'annonce du nouveau prix offert pouvant être effectuée à l'attention des participants par une annonce du modérateur ou par un composant « synthétiseur de paroles ».

14. Utilisation du procédé de génération de signaux pour un système de conférence (KS) selon la revendication 10 ou 11, dans laquelle est exécutée une visioconférence, des gestes des participants, tels que, par exemple, lever la main, secouer la tête, hocher la tête et faire un signe de la main étant évalués et communiqués au système de transmission (1, F1, F2, F3, UMTS).
